(19) Europäisches Patentamt / European Patent Office / Office européen des brevets

(11) **EP 2 826 817 B1**

(12) **EUROPÄISCHE PATENTSCHRIFT**

(45) Veröffentlichungstag und Bekanntmachung des Hinweises auf die Patenterteilung:
**05.07.2017   Patentblatt 2017/27**

(51) Int Cl.:
***C08L 67/02*** *(2006.01)*     ***C08L 67/04*** *(2006.01)*

(21) Anmeldenummer: **13176526.5**

(22) Anmeldetag: **15.07.2013**

(54) **BIOLOGISCH ABBAUBARE POLYESTERMISCHUNG**

BIODEGRADABLE POLYESTER MIXTURE

MÉLANGE DE POLYESTER BIODÉGRADABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.01.2015   Patentblatt 2015/04**

(73) Patentinhaber: **BASF SE**
**67056 Ludwigshafen am Rhein (DE)**

(72) Erfinder:
 • **Molawi, Kian**
   **68163 Mannheim (DE)**
 • **Loos, Robert**
   **67067 Ludwigshafen (DE)**
 • **Lohmann, Jerome**
   **76829 Landau (DE)**
 • **Künkel, Andreas**
   **67434 Neustadt (DE)**

(74) Vertreter: **BASF IP Association**
   **BASF SE**
   **G-FLP-C006**
   **67056 Ludwigshafen (DE)**

(56) Entgegenhaltungen:
   **EP-A1- 0 618 250     EP-A1- 1 489 122**
   **EP-A2- 0 697 427     WO-A1-2006/074815**

 • **DATABASE WPI Week 201039 Thomson Scientific, London, GB; AN 2010-G44216 XP002716914, -& JP 2010 126619 A (TORAY IND INC) 10. Juni 2010 (2010-06-10)**

Bemerkungen:
   Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine biologisch abbaubare Polyestermischung, umfassend

i) 5 bis 85 Gew.-%, bezogen auf das Gesamtgewicht der Komponenten i bis ii, mindestens eines Polyesters auf Basis von aliphatischen oder aliphatischen und aromatischen Dicarbonsäuren und aliphatischen Dihydroxyverbindungen und

ii) 15 bis 95 Gew.-%, bezogen auf das Gesamtgewicht der Komponenten i bis ii, Polymilchsäure, und

iii) 1 bis 35 Gew.-%, bezogen auf das Gesamtgewicht der Komponenten i bis iii, eines Triblockpolymers iii erhältlich durch Umsetzung von:

x) 20 bis 60 Gew.-%, bezogen auf die Komponente iii, eines Polyester-Mittelblocks auf Basis von aliphatischen oder aliphatischen und aromatischen Dicarbonsäuren und aliphatischen Dihydroxyverbindungen mit einem Molekulargewicht Mn gemessen nach $^1$H-NMR von 4.000 bis 25.000, mit
y) 40 bis 80 Gew.-%, bezogen auf die Komponente iii, eines Lactids in Gegenwart eines Katalysators;

iv) 0 bis 10 Gew.-% , bezogen auf das Gesamtgewicht der Komponenten i bis v, eines Additivs; und

v) 0 bis 50 Gew.-%, bezogen auf das Gesamtgewicht der Komponenten i bis v, eines anorganischen oder organischen Füllstoffs.

Des Weiteren betrifft die vorliegende Erfindung die Verwendung der obengenannten biologisch abbaubaren Polyestermischungen.
Die JP 2010 126619 A offenbart biologisch abbaubare Polyestermischungen, umfassend einen Polyester auf Basis von aliphatischen oder aliphatischen und aromatischen Dicarbonsäuren und aliphatischen Dihydroxyverbindungen, Polymilchsäure sowie ein Triblockpolymer erhältlich durch Umsetzung eines Polyethers mit einem Lactid. Verzweigte Blockcopolymere sind beispielsweise aus US 5,202,413 und EP 697427 bekannt, die wie folgt hergestellt werden. Lactid wird auf einen aliphatischen Polyester mit einem niedrigen Molekulargewicht (Mn) polymerisiert. Um das Molekulargewicht des Blockpolymers zu erhöhen, wird mit einem polyfunktionelllen Isocyanat kettenverlängert und verzweigt.
EP 618250 beschreibt lineare Triblockcopolymere mit einem Molekulargewicht (Mn) von größer 30.000 und gleichzeitig einem sehr hohem PLA-Anteil (90%).
Die vorgenannten verzweigten oder linearen Triblockcopolymere werden als Soloprodukt im Verpackungssektor eingesetzt.
Die vorliegende Erfindung hat hingegen biologisch abbaubare Polyestermischungen zum Gegenstand, wie sie beispielsweise in der EP 1838784 beschrieben sind. Die dort beschriebenen Polyestermischungen sind hinsichtlich Zähigkeit und Steifigkeit optimiert, können jedoch hinsichtlich der Weiterreißfestigkeit bei dünnen Folien und bei höherem Polymilchsäuregehalt nicht immer überzeugen.
Ziel der vorliegenden Erfindung war es die Anwendungseigenschaften von Polyestermischungen der Komponenten i und ii weiter zu verbessern, beispielsweise Polyesterfolien mit verbesserter Weiterreißfestigkeit zu entwickeln, die zuverlässig zu Blasfolien verarbeitet werden können.
Demgemäß wurde die eingangs erwähnte biologisch abbaubare Polyestermischung gefunden, umfassend:

i) 5 bis 85 Gew.-%, bezogen auf das Gesamtgewicht der Komponenten i bis ii, mindestens eines Polyesters auf Basis von aliphatischen oder aliphatischen und aromatischen Dicarbonsäuren und aliphatischen Dihydroxyverbindungen und

ii) 15 bis 95 Gew.-%, bezogen auf das Gesamtgewicht der Komponenten i bis ii, Polymilchsäure, und

iii) 1 bis 35 Gew.-%, bezogen auf das Gesamtgewicht der Komponenten i bis iii, eines Triblockpolymers iii erhältlich durch Umsetzung von:

x) 20 bis 60 Gew.-%, bezogen auf die Komponente iii, eines Polyester-Mittelblocks auf Basis von aliphatischen oder aliphatischen und aromatischen Dicarbonsäuren und aliphatischen Dihydroxyverbindungen mit einem Molekulargewicht Mn gemessen nach $^1$H-NMR von 4.000 bis 25.000, mit
z) 40 bis 80 Gew.-%, bezogen auf die Komponente iii, eines Lactids in Gegenwart eines Katalysators;

iv) 0 bis 10 Gew.-%, bezogen auf das Gesamtgewicht der Komponenten i bis v, eines Additivs; und

v) 0 bis 50 Gew.-%, bezogen auf das Gesamtgewicht der Komponenten i bis v, eines anorganischen oder organischen Füllstoffs.

Im Folgenden wird die Erfindung näher beschrieben.

Prinzipiell kommen für die Herstellung der erfindungsgemäßen biologisch abbaubaren Polyestermischungen als Komponente i alle Polyester auf Basis von aliphatischen und aromatischen Dicarbonsäuren und aliphatischen Dihydroxyverbindung, sogenannte teilaromatische Polyester oder aliphatische Polyester aus aliphatischen Dicarbonsäuren und aliphatischen Diolen in Betracht. Gemeinsam ist diesen Polyestern, dass sie biologisch abbaubar nach DIN EN 13432 sind. Selbstverständlich sind auch Mischungen mehrerer solcher Polyester als Komponente i geeignet.

Unter teilaromatischen Polyestern (Komponente i) sollen erfindungsgemäß auch Polyesterderivate die bis zu 10 mol% bezogen auf das Polymer eine andere als eine Esterfunktion enthalten, verstanden werden wie Polyetherester, Polyesteramide oder Polyetheresteramide und Polyesterurethane. Zu den geeigneten teilaromatischen Polyestern gehören lineare nicht kettenverlängerte Polyester (WO 92/09654). Bevorzugt werden kettenverlängerte und/oder verzweigte teilaromatische Polyester. Letztere sind aus den eingangs genannten Schriften , WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht. Interessante jüngere Entwicklungen basieren auf nachwachsenden Rohstoffen (siehe WO-A 2006/097353, WO-A 2006/097354 sowie WO-A 2010/034710). Insbesondere sind unter teilaromatischen Polyestern Produkte wie ecoflex® (BASF SE) und Eastar® Bio, Origo-Bi® (Novamont) zu verstehen.

Zu den besonders bevorzugten teilaromatischen Polyestern zählen Polyester, die als wesentliche Komponenten

A) eine Säurekomponente aus:

a1) 30 bis 99 mol-%, vorzugsweise 45 bis 60 mol-%, mindestens einer aliphatischen Dicarbonsäure oder deren esterbildende Derivate oder Mischungen davon

a2) 1 bis 70 mol-%, vorzugsweise 40 bis 55 mol-%, mindestens einer aromatischen Dicarbonsäure oder deren esterbildendem Derivat oder Mischungen davon und

B) 98 bis 102 mol% bezogen auf die Säurekomponente A eine Diolkomponente B ausgewählt aus mindestens einem $C_2$-bis $C_{12}$-Alkandiol oder Mischungen davon und

C) 0,01 bis 3 Gew.-% bezogen auf die Komponenten A und B einer Komponente C ausgewählt aus

c1) einer Verbindung mit mindestens drei zur Ester- oder Amidbildung befähigten Gruppen,

c2) eines Di- oder Polyisocyanates,

c3) eines Di- oder Polyepoxids

oder Mischungen aus c1) bis c3) enthalten.

Die Säurekomponente A besteht bei den teilaromatischen Polyestern aus aliphatischen Säuren a1 und aromatischen Säuren a2 und bei den aliphatischen Polyestern ausschließlich aus aliphatischen Säuren a1.

Als aliphatische Säuren und die entsprechenden Derivate a1 kommen im Allgemeinen solche mit 2 bis 18 Kohlenstoffatomen, vorzugsweise 4 bis 10 Kohlenstoffatomen, in Betracht. Sie können sowohl linear als auch verzweigt sein. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Oxalsäure, Malonsäure, Bernsteinsäure, Glutarsäure, 2-Methylglutarsäure, 3-Methylglutarsäure, α-Ketoglutarsäure, Adipinsäure, Pimelinsäure, Azelainsäure, Sebacinsäure, Brassylsäure, Fumarsäure, 2,2-Dimethylglutarsäure, Suberinsäure (Korksäure), Diglykolsäure, Oxalessigsäure, Glutaminsäure, Asparaginsäure, Itaconsäure und Maleinsäure. Dabei können die Dicarbonsäuren oder deren esterbildenden Derivate, einzeln oder als Gemisch aus zwei oder mehr davon eingesetzt werden.

Bevorzugt werden Bernsteinsäure, Adipinsäure, Azelainsäure, Sebacinsäure, Brassylsäure oder deren jeweilige esterbildenden Derivate oder Mischungen davon eingesetzt. Besonders bevorzugt wird Bernsteinsäure, Adipinsäure oder Sebacinsäure oder deren jeweilige esterbildenden Derivate oder Mischungen davon eingesetzt. Bernsteinsäure, Azelainsäure, Sebacinsäure und Brassylsäure haben zudem den Vorteil, dass sie aus nachwachsenden Rohstoffen zugänglich sind.

Insbesondere bevorzugt sind die folgenden aliphatisch-aromatischen Polyester: Polybutylenadipatterephthalat (PBAT), Polybutylensebacatterephthalat (PBSeT) oder Polybutylensuccinatterephthalat (PBST).

Die aromatischen Dicarbonsäuren oder deren esterbildende Derivate a2 können einzeln oder als Gemisch aus zwei oder mehr davon eingesetzt werden. Besonders bevorzugt wird Terephthalsäure oder deren esterbildende Derivate wie Dimethylterephthalat, verwendet.

Im Allgemeinen werden die Diole B unter verzweigten oder linearen Alkandiolen mit 2 bis 12 Kohlenstoffatomen, bevorzugt 4 bis 6 Kohlenstoffatomen, oder Cycloalkandiolen mit 5 bis 10 Kohlenstoffatomen ausgewählt.

Beispiele geeigneter Alkandiole sind Ethylenglykol, 1,2-Propandiol, 1,3-Propandiol, 1,2-Butandiol, 1,4-Butandiol, 1,5-Pentandiol, 2,4-Dimethyl-2-ethylhexan-1,3-diol, 2,2-Dimethyl- 1,3-propandiol, 2-Ethyl-2-butyl-1,3-propandiol, 2-Ethyl-2-isobutyl- 1,3-propandiol, 2,2,4-Trimethyl-1,6-hexandiol, insbesondere Ethylenglykol, 1,3-Propandiol, 1,4-Butandiol und 2,2-Dimethyl- 1,3-propandiol (Neopentylglykol); Cyclopentandiol, 1,4-Cyclohexandiol, 1,2-Cyclohexandimethanol, 1,3-Cyclohexandimethanol, 1,4-Cyclohexandimethanol oder 2,2,4,4-Tetramethyl-1,3-cyclo-butandiol. Besonders bevorzugt sind 1,4-Butandiol, insbesondere in Kombination mit Adipinsäure als Komponente a1) und 1,3- Propandiol, insbesondere in Kombination mit Sebacinsäure als Komponente a1). 1,3- Propandiol hat zudem den Vorteil, dass es als nachwachsender Rohstoff zugänglich ist. Es können auch Mischungen unterschiedlicher Alkandiole verwendet werden.

In der Regel werden 0 bis 1 Gew-%, vorzugsweise 0,01 bis 0.9 Gew.-% und insbesondere bevorzugt 0,1 bis 0,8 Gew.-% bezogen auf das Gesamtgewicht der Komponenten A und B, eines Vernetzers C und/oder Langkettenverzweigers C' ausgewählt aus der Gruppe bestehend aus: einem polyfunktionellen Isocyanat, Isocyanurat, Oxazolin, Carbonsäureanhydrid wie Maleinsäureanhydrid, Epoxid (insbesondere einem epoxidhaltigen Poly(meth)acrylats), einem mindestens trifunktionellen Alkohol oder einer mindestens trifunktionellen Carbonsäure eingesetzt. Als Langkettenverzweigers kommen polyfunktionelle und insbesondere Mischungen aus difunktionelle und höherfunktionellen Isocyanate, Isocyanurate, Oxazoline oder Epoxide in Frage.

Besonders bevorzugte Verbindungen haben drei bis sechs funktionellen Gruppen. Beispielhaft seien genannt: Weinsäure, Zitronensäure, Äpfelsäure, Trimesinsäure, Trimellitsäure, Trimellitsäureanhydrid, Pyromellitsäure und Pyromellitsäuredianhydrid; Trimethylolpropan, Trimethylolethan; Pentaerythrit; Polyethertriole und Glycerin. Bevorzugt sind Polyole wie Trimethylolpropan, Pentaerythrit und insbesondere Glycerin. Mittels der Komponenten d lassen sich biologisch abbaubare Polyester mit einer strukturellen Viskosität aufbauen. Das rheologische Verhalten der Schmelzen verbessert sich; die biologisch abbaubaren Polyester lassen sich leichter verarbeiten, beispielsweise besser durch Schmelzeverfestigung zu Folien ausziehen. Die Verbindungen wirken scherentzähend, d.h. sie verstärken die Strukturviskosität des Polymeren. Die Viskosität unter Belastung wird geringer.

In der Regel ist es sinnvoll die vernetzenden (mindestens trifunktionellen) Verbindungen zu einem früheren Zeitpunkt der Polymerisation zuzugeben.

Als Langkettenverzweiger eignen sich beispielsweise Toluylen-2,4-diisocyanat, Toluylen-2,6-diisocyanat, 2,2'-Diphenylmethandiisocyanat, 2,4'-Diphenylmethandiisocyanat, 4,4'-Diphenylmethan-diisocyanat, Naphthylen-1,5-diisocyanat oder Xylylen-diisocyanat,1,6-Hexamethylendiisocyanat, Isophorondiisocyanat oder Methylen-bis(4-isocyanatocyclo-hexan) verstanden. Besonders bevorzugte sind Isophorondiisocyanat und insbesondere 1,6-Hexamethylendiisocyanat.

Die Polyester i weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 50000 g/mol, ein gewichtsmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 30 und 450, vorzugsweise von 50 bis 400 g/mL (gemessen in o-Dichlorbenzol/Phenol (Gewichtsverhältnis 50/50). Der Schmelzpunkt liegt im Bereich von 85 bis 130, bevorzugt im Bereich von 95 bis 120°C.

Unter aliphatischen Polyestern (Komponente i) werden Polyester aus aliphatischen Diolen und aliphatischen Dicarbonsäuren wie Polybutylensuccinat (PBS), Polybutylenadipat (PBA), Polybutylensuccinatadipat (PBSA), Polybutylensuccinatsebacat (PBSSe), Polybutylensebacat (PBSe) oder entsprechende Polyesteramide oder Polyesterurethane verstanden. Die aliphatischen Polyester werden beispielsweise von den Firmen Showa Highpolymers unter dem Namen Bionolle und von Mitsubishi unter dem Namen GSPla vermarktet. Neuere Entwicklungen sind in der WO-A 2010/034711 beschrieben.

Auch die aliphatischen Polyester i enthalten vorzugsweise 0,01 bis 0,9 Gew.-% und insbesondere bevorzugt 0,1 bis 0,8 Gew.-% bezogen auf das Gesamtgewicht der Komponenten A und B, eines Vernetzers C und/oder Langkettenverzweigers C' ausgewählt aus der Gruppe bestehend aus: einem polyfunktionellen Isocyanat, Isocyanurat, Oxazolin, Carbonsäureanhydrid wie Maleinsäureanhydrid, Epoxid (insbesondere einem epoxidhaltigen Poly(meth)acrylats), einem mindestens trifunktionellen Alkohol oder einer mindestens trifunktionellen Carbonsäure eingesetzt.

Die aliphatischen Polyester i weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 50000 g/mol, ein gewichtsmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 30 und 450, vorzugsweise von 50 bis 400 g/mL (gemessen in o-Dichlorbenzol/Phenol (Gewichtsverhältnis 50/50). Der Schmelzpunkt liegt im Bereich von 85 bis 130, bevorzugt im Bereich von 95 bis 120°C.

Die Viskositätszahl (VZ) der gebildeten Copolymere liegt bei 100 bis 450 mL/g, bevorzugt bei 110 bis 300 mL/g, und insbesondere bei 120 bis 250 mL/g.

Die Polyester in Komponente i können auch Mischungen aus aliphatisch-aromatischen Polyestern und rein aliphatischen Polyestern enthalten wie beispielsweise Mischungen aus PBAT und PBS.

Als Komponente ii kommt Polymilchsäure (PLA) in Frage.

Polymilchsäure mit dem folgenden Eigenschaftsprofil wird bevorzugt eingesetzt:

- einer Schmelzvolumenrate (MVR bei 190° C und 2.16 kg nach ISO 1133) von 0.5 bis 30 vorzugsweise 2 - 9 ml/10 Minuten
- einem Schmelzpunkt unter 240° C;
- einem Glaspunkt (Tg) größer 55°C
- einem Wassergehalt von kleiner 1000 ppm
- einem Monomeren-Restgehalt (Lactid) von kleiner 0.3%.
- einem Molekulargewicht von größer 80 000 Dalton.

Bevorzugte Polymilchsäuren sind beispielsweise NatureWorks® 6201 D, 6202 D, 6251 D, 3051 D und insbesondere 4020 D oder 4043D (Polymilchsäure der Fa. NatureWorks).

Der Polyester i wird in Bezug auf das Gesamtgewicht der Komponenten i bis ii, in 5 bis 85 Gew.-%, für Folienanwendungen in vorzugsweise 55 bis 85 Gew.-%, und für Spritzguß- und Schaumanwendungen in vorzugsweise 5 bis 45 Gew.-% eingesetzt.

Umgekehrt wird die Polymilchsäure ii, in Bezug auf das Gesamtgewicht der Komponenten i bis ii, in 15 bis 95 Gew.-%, für Folienanwendungen in vorzugsweise 15 bis 45 Gew.-%, und für Spritzguß- und Schaumanwendungen in vorzugsweise 55 bis 95 Gew.-% eingesetzt.

Die Triblockpolymere iii sind durch Umsetzung von:

x) 20 bis 60 Gew.-%, vorzugsweise 20 bis 50 Gew.-%, besonders bevorzugt 25 bis 45 Gew.-%, bezogen auf die Komponente iii, eines Polyester-Mittelblocks auf Basis von aliphatischen oder aliphatischen und aromatischen Dicarbonsäuren und aliphatischen Dihydroxyverbindungen mit einem Molekulargewicht Mn gemessen nach $^1$H-NMR von 4.000 bis 25.000, mit

y) 40 bis 80 Gew.-%, vorzugsweise 50 bis 80 Gew.-%, besonders bevorzugt 55 bis 75 Gew.-%, bezogen auf die Komponente iii, eines Lactids in Gegenwart eines Katalysators zugänglich.

Zunächst wird der weiche Polyester-Mittelblock x synthetisiert. Hierzu kommen die gleichen aliphatischen oder aliphatischen und aromatischen Dicarbonsäuren a1 und a2 und aliphatischen Diole B wie für Komponente i zum Einsatz, allerdings wird auf den Zusatz von der verzweigenden oder kettenverlängernden Komponente C verzichtet um einen linearen Polyester-Mittelblock x zu erhalten. Davon abgesehen, sind die Verfahren zur Herstellung des Polyester-Mittelblocks die gleichen wie für Komponente i).

Vorzugsweise besteht der Polyester-Mittelblock x aus den gleichen Dicarbonsäuren A und Diolen B wie die Komponente i. Insbesondere bevorzugt besteht Komponente i aus einem verzweigten Polybutylenadipatterephthalat (PBAT), und/oder verzweigten Polybutylensebacatterephthalat (PBSeT) und der Polyester-Mittelblock x besteht aus linearem PBAT, und/oder linearem PBSeT. Weiterhin bevorzugt besteht Komponente i aus einem verzweigten Polybutylensuccinat (PBS), und/oder verzweigten Polybutylensuccinat-cosebacat (PBSSe) und der Polyester-Mittelblock x besteht aus linearem PBS, und/oder linearem PBSSe.

Der Polyester-Mittelblock x kann zu analytischen Zwecken zwischenisoliert werden. Er weist in der Regel ein Molekulargewicht Mn ermittelt nach der $^1$H-NMR-Methode von 4000 bis 25000, vorzugsweise 4000 bis 20.000 und insbesondere bevorzugt von 10.000 bis 20.000 auf. Die Methode zur Molekulargewichtsbestimmung (Mn) mittels $^1$H-NMR ist im Kapitel Anwendungstechnische Messungen detailliert beschrieben.

Für die weitere Umsetzung mit Lactid ist es von Vorteil, wenn der Polyester-Mittelblock x einen hohen Gehalt von Hydroxyl-Endgruppen aufweist. Insbesondere bevorzugt beträgt der Gehalt an Hydroxyl-Endgruppen (ermittelt nach der Endgruppenbestimmung mittels der $^1$H-NMR-Methode durch das Verhältnis (Hydroxylzahl + Säurezahl) zu (Hydroxylzahl + 2 ∗ Säurezahl)) mehr als 85%, vorzugsweise mehr als 90% und insbesondere bevorzugt mehr als 95%.

Zu dem Polyester-Mittelblock x wird dann vorzugsweise der Katalysator, beispielsweise gelöst in einem Lösungsmittel gegeben. Bevorzugt wird als Katalysator Zinndioctanat eingesetzt.

Anschließend wird zu der obengenannten Mischung Lactid gegeben. In der Regel wird das Lactid in einer Konzentration von 30 bis 80 Gew.-%, bezogen auf das das Gesamtgewicht des Triblockcopolymeren iii, eingesetzt. Dies entspricht einem Verhältnis von Gewichtsanteilen Lactid zu Mittelblock X von 1:2 bis 5:1 vorzugsweise 1:1 bis 3:1. In der Regel wird L-Lactid eingesetzt.

In einer bevorzugten Ausführungsform kann D-Lactid eingesetzt werden. In Kombination mit einer Komponente ii, die überwiegend aus L-Lactid besteht, können sich so Stereokomplexe ausbilden, die eine bessere Kompatibilisierung der Mischung gewährleisten.

Das Triblockpolymer iii wird im Allgemeinen in 1 bis 35 Gew.-%, vorzugsweise 5 bis 30 Gew.-%, und insbesondere bevorzugt 10 bis 25 Gew.-%, bezogen auf das Gesamtgewicht der Komponenten i bis iii, eingesetzt.

Auch können den Polymermischungen 0 bis 1 Gew.-%, bevorzugt 0,01 bis 0,8 Gew.-%, besonders bevorzugt 0,05 bis 0,5 Gew.-%, bezogen auf das Gesamtgewicht der Komponenten i bis v, eines Epoxidgruppen-haltigen Copolymers auf Basis Styrol, Acrylsäureester und/oder Methacrylsäureester iv zugesetzt werden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) $M_w$ der Polymere beträgt vorzugsweise 2000 bis 25.000, insbesondere 3000 bis 8.000. Das mittlere Molekulargewicht (Zahlenmittel) $M_n$ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl® ADR vertrieben. Besonders geeignet ist Joncryl® ADR 4368.

Als Komponente v werden 0 bis 50 Gew.-%, bevorzugt 10 bis 35 Gew.-%, bezogen auf das Gesamtgewicht der Komponenten i bis v, eines anorganischen oder organischen Füllstoffs eingesetzt. Unter anorganischen Füllstoffen werden beispielsweise Calciumcarbonat, Talk Graphit, Gips, Leitruß, Eisenoxid, Calciumchlorid, Kaolin, Siliziumdioxid (Quarz), Natriumcarbonat, Titandioxid, Silikat, Wollastonit, Glimmer, Montmorellonite und Mineralfasern. Die Mineralien können auch als Nanofüllstoffe eingesetzt werden.

Nanofüllstoffen sind insbesondere feinteilige Schichtsilikate, bevorzugt Tonmineralien, besonders bevorzugt Montmorillonit enthaltend Tonmineralien, deren Oberfläche mit einem oder mehreren quarternären Ammoniumsalzen und/oder Phosphoniumsalzen und/oder Sulfoniumsalzen modifiziert sind. Als Tonmineralien bevorzugt sind natürliche Montmorillonite und Bentonite

Besonders bevorzugte anorganische Füllstoffe sind Calciumcarbonat und Talk. Unter anderem hat sich das Calciumcarbonat der Fa. Omya als geeignet erwiesen. Das Calciumcarbonat weist in der Regel eine mittlere Teilchengröße von 0,5 bis 10 Mikrometern bevorzugt 1 - 5, besonders bevorzugt 1 - 2.5 Mikrometern auf. Unter anderem hat sich der Talk der Fa. Mondo Minerals als geeignet erwiesen. Der Talk weist in der Regel eine mittlere Teilchengröße von 0,5 - 10, bevorzugt 1 - 8, besonders bevorzugt 1 - 3 Mikrometern auf.

Weiterhin können der Polyestermischung noch organische Füllstoffe v wie Stärke oder Amylose zugesetzt werden. Stärke und Amylose können nativ, d.h. nicht thermoplastifiziert oder mit Weichmachern wie beispielsweise Glycerin oder Sorbit thermoplastifiziert sein (EP-A 539 541, EP-A 575 349, EP 652 910).

Weiterhin kann die erfindungsgemäße Polyesterfolie weitere dem Fachmann bekannte, Additive enthalten. Beispielsweise die in der Kunststofftechnik üblichen Zusatzstoffe wie Stabilisatoren; Nukleierungsmittel; Gleit- und Trennmittel wie Stearate (insbesondere Calziumstearat); Weichmacher (Plastifizierer) wie beispielsweise Zitronensäureester (insbesondere Acetyl-tributylcitrat), Glycerinsäureester wie Triacetylglycerin oder Ethylenglykolderivate, Tenside wie Polysorbate, Palmitate oder Laurate; Wachse wie beispielsweise Erucasäureamid, Stearinsäureamid oder Behenamid, Bienenwachs oder Bienenwachsester; Antistatikum, UV-Absorbers; UV-Stabilisators; Antifog-Mittel oder Farbstoffe. Die Additive werden in Konzentrationen von 0 bis 5 Gew.-%, insbesondere 0,1 bis 2 Gew.-% bezogen auf die erfindungsgemäßen Polyester eingesetzt. Weichmacher können in 0,1 bis 10 Gew.-% in den erfindungsgemäßen Polyestern enthalten sein.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Polyester-(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 (Bezug nehmend auf ISO 14855) $CO_2$-freie Luft durch gereiften Kompost während des Kompostierens strömen gelassen und dieser einem definierten Temperaturprogramm unterworfen. Hierbei wird die biologische Abbaubarkeit über das Verhältnis der Netto-$CO_2$-Freisetzung der Probe (nach Abzug der $CO_2$-Freisetzung durch den Kompost ohne Probe) zur maximalen $CO_2$-Freisetzung der

Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.

Die eingangs genannten biologisch abbaubaren Polyesterfolien sind zur Herstellung von Netzen und Gewebe, Schlauchfolien, Chill-Roll-Folien mit und ohne einer Orientierung in einem weiteren Verfahrensschritt, mit und ohne Metallisierung oder SiOx-Beschichtung geeignet.

Insbesondere eignen sich die eingangs definierten Polyesterfolien enthaltend die Komponenten i) bis v) für Schlauchfolien und Stretchfolien. Mögliche Anwendungen sind hier Bodenfaltbeutel, Seitennahtbeutel, Tragetaschen mit Griffloch, Schrumpfetiketten oder Hemdchentragetaschen, Inliner, Schwergutsäcke, Gefrierbeutel, Kompostierbeutel, Landwirtschaftsfolien (Mulchfilme), Folienbeutel zur Verpackung von Nahrungsmitteln, abziehbare Verschlussfolie - transparent oder undurchsichtig - schweißbare Verschlussfolie - transparent oder undurchsichtig -, Wursthülle, Salatfolie, Frischhaltefolie (Stretchfolie) für Obst und Gemüse, Fleisch und Fisch, Stretchfolie zum Einschlagen von Paletten, Folie für Netze, Verpackungsfolien für Snacks, Schoko- und Müsliriegel, peelbare Deckelfolien für Molkereiverpackungen (Joghurt, Sahne etc.), Obst und Gemüse, halbharte Verpackungen für geräucherte Wurst und Käse.

Die Polyesterfolien enthaltend die Komponenten i bis v) weisen nach der Extrusion zu ein- oder mehrlagigen Schlauch-, Cast- oder Pressfolien eine hohe Reißfestigkeit (gemäß

EN ISO 6383-2:2004) auf. Die Weiterreißfestigkeit ist eine sehr wichtige Produkteigenschaft vor allem im Bereich dünner (Schlauch-)folien für z.B. Biomüllbeutel oder dünnwandige Tragetaschen (z.B. Hemdchentragetaschen, Obstbeutel). Daneben ist sie von besonderer Bedeutung bei Mulchfolien im Agrarbereich.

Anwendungstechnische Messungen:

Die Bestimmung der Viskositätszahlen erfolgte nach DIN 53728 Teil 3, 3. Januar 1985, Kapillarviskosimetrie. Zum Einsatz kam ein Mikro-Ubbelohde Viskosimeter, Typ M-II. Als Lösungsmittel wurde das Gemisch: Phenol/o-Dichlorbenzol im Gewichtsverhältnis 50/50 verwendet.

Die Zugeigenschaften der Polymere wurden gemäß ISO 527-2 an Probekörpern nach ISO 527-S/5A bestimmt. Die Probekörper wurden aus einer Pressfolie mit einer Dicke von etwa 250 μm ausgestanzt.

Bestimmung der Säurezahl: ca. 1,0 g Probe wurden exakt eingewogen (m) und in 10 ml Toluol und 10 ml Pyridin gelöst. Nach Zugabe von 5 ml deionisiertem Wasser und 50 ml Tetrahydrofuran wurde mit ethanolischer Kaliumhydroxid Maßlösung potentiographisch gegen Wendepunkt titriert ($V_P$) [Potentiograph, ausgerüstet mit einem Dosimaten mit Wechselbürette (z.B. 10 ml) und einer kombinierten Glas-Ag/AgCl-Elektrode, z.B. Titroprozessor Typ 726 mit Dosimat 685 (Firma Metrohm)]. Unter den gleichen Bedingungen, nur ohne Prüfgegenstand, wurde der Blindwert titriert ($V_B$).

$$\text{Berechnung: Säurezahl in mg KOH/g} = [(V_P - V_B) * c_{KOH} * t_{KOH} * 56{,}10\ g*mol^{-1}] : m$$

Bestimmung der Hydroxylzahl: ca. 1,0 g Probe wurden exakt eingewogen (m) und in 10 ml Toluol gelöst. 9,8 ml Acetylierungsreagenz [Acetylierungsreagenz:

810 ml Pyridin + 100 ml Essigsäureanhydrid + 9 ml Essigsäure wurden zugegeben und die Mischung 1 h bei 95 °C gerührt. Nach Zugabe von 5 ml deionisiertem Wasser wurde die Probe unter Rühren auf Raumtemperatur abgekühlt, mit 50 ml Tetrahydrofuran versetzt und mit 0.5 molarer ethanolischer Kaliumhydroxid Maßlösung potentiographisch gegen Wendepunkt titriert ($V_P$) [Potentiograph, ausgerüstet mit einem Dosimaten mit Wechselbürette (z.B. 10 ml) und einer kombinierten Glas-Ag/AgCl-Elektrode, z.B. Titroprozessor Typ 726 mit Dosimat 685 (Firma Metrohm)]. Unter den gleichen Bedingungen, nur ohne Prüfgegenstand, wurde der Wirkwert titriert (Vw).

$$\text{Berechnung: Hydroxylzahl in mg KOH/g} = [(V_W - V_P) * c_{KOH} * t_{KOH} * 56{,}10\ g*mol^{-1}] : m$$

Das Molekulargewichte Mn der Polyester-Mittelblöcke wurde mittels $^1$H-NMR-Spektroskopie bestimmt (Lösungsmittel: 1,1,2,2-Tetrachloroethane-$D_2$). Hierzu wurde die Summe der Integrale zwischen 4.0 und 4.5 ($CH_2$-OOCR) zur Summen der Integrale zwischen 3.58 und 3.78 (terminale Polyester-$CH_2$-Gruppen) ins Verhältnis gesetzt.

Berechnung: Mn in g/mol = Integral$_{4.0-4.5}$ : Integral$_{3.58-3.78}$ * (durchschnittliche Masse einer Wiederholungseinheit des Polyesters) *(Hydroxylzahl + Säurezahl) : (Hydroxylzahl + 2 * Säurezahl)

Das Molekulargewichte Mn der Triblöcke wurde ebenfalls mittels $^1$H-NMR-Spektroskopie bestimmt (Lösungsmittel: 1,1,2,2-Tetrachloroethane-D$_2$). Hierzu wurde die Summe der Integrale zwischen 4.0 und 4.5 (CH$_2$-OOCR) zum PLA-Integral zwischen 5.1 und 5.3 - unter Berücksichtigung des zuvor ermittelten Mn des Mittelblocks x - ins Verhältnis gesetzt.

Der Polydispersitätsindex (PDI) der Polymere wurden gemäß DIN 55672-1 bestimmt; Elutionsmittel Hexafluoroisopropanol (HFIP) + 0,05 Gew.-% Trifluor-oessigsäure-Ka-Salz; Die Kalibrierung erfolgte mit eng verteilten Polymethylmethacrylat-Standards.

Eingesetzte Materialien:

Komponente i)

i-1) Polybutylenadipatterephthalat

Zur Herstellung des Polyesters A1 wurden 87,3 kg Dimethylterephthalat, 80,3 kg Adipinsäure, 117 kg 1,4-Butandiol und 0,2 kg Glycerin zusammen mit 0,028 kg Tetrabutylorthotitanat (TBOT) gemischt, wobei das Molverhältnis zwischen Alkoholkomponenten und Säurekomponente 1,30 betrug. Das Reaktionsgemisch wurde auf eine Temperatur von 180°C erhitzt und bei dieser Temperatur 6h lang umgesetzt. Anschließend wurde die Temperatur auf 240°C erhöht und die überschüssige Dihydroxyverbindung unter Vakuum über einen Zeitraum von 3h abdestilliert. Anschließend wurden bei 240°C 0,9 kg Hexamethylendiisocyanat innerhalb 1 h langsam zudosiert.

Der so erhaltene Polyester A1 (Komponente i-1) wies eine Schmelztemperatur von 119°C und ein Molekulargewicht (M$_n$) von 23000 g/mol auf.

Komponente ii)

ii-1) Polymilchsäure (PLA) Typ 4043 D der Firma Natureworks LLC

Komponente iii)

Herstellung des Mittelblocks x

a) Polybutylenterephthalat-co-adipat (PBAT)

(Molverhältnis Terephthalsäure : Adipinsäure = 47 : 53)

456,31 g Dimethylterephthalat, 585,78 g 1,4-Butandiol und 0,56 g Tetrabutylorthotitanat (TBOT) wurden in einem 2 L Vierhalskolben vorgelegt und die Apparatur wurde mit Stickstoff gespült. Methanol wurde bis zu einer Innentemperatur von 190 °C abdestilliert. Anschließend wurden 387,27 g Adipinsäure hinzugegeben und Wasser bis zu einer Innentemperatur von 220 °C abdestilliert. Es wurde auf etwa 180 °C abgekühlt, 0,56 g Tetrabutylorthotitanat (TBOT) zugegeben und Vakuum angelegt (2 mbar). Schließlich wurde bis zu einer Innentemperatur von 240 °C hochgeheizt und nach Erreichen der gewünschten Viskosität auf Raumtemperatur abgekühlt.

> a-1): VZ = 92 mL/g; Mn = 13500 g/mol; PDI = 2.5
> in analoger Fahrweise wurde hergestellt:
> a-2): VZ = 86 mL/g; Mn = 14400 g/mol; PDI = 2.5

b) Polybutylensuccinat

705,6 g Bernsteinsäure, 700,0 g 1,4-Butandiol und 1,1 g Tetrabutylorthotitanat (TBOT) wurden in einem 2 L Vierhalskolben vorgelegt und die Apparatur wurde mit Stickstoff gespült. Wasser wurde bis zu einer Innentemperatur von 200 °C abdestilliert. Anschließend wurde auf etwa 160 °C abgekühlt und Vakuum angelegt (2 mbar). Es wurde bis zu einer Innentemperatur von 250 °C Butandiol abdestilliert und nach Erreichen der gewünschten Viskosität auf Raumtemperatur abgekühlt.

b-1): VZ = 69 mL/g; Mn = 10600 g/mol; PDI = 2.6

c) Polybutylenazelainat

1069,43 g Bernsteinsäure, 585,79 g 1,4-Butandiol und 1,29 g Tetrabutylorthotitanat (TBOT) wurden in einem 2 L Vierhalskolben vorgelegt und die Apparatur wurde mit Stickstoff gespült. Wasser wurde bis zu einer Innentemperatur von 200 °C abdestilliert. Anschließend wurde auf etwa 160 °C abgekühlt und Vakuum angelegt (2 mbar). Es wurde bis zu einer Innentemperatur von 250 °C Butandiol abdestilliert und nach Erreichen der gewünschten Viskosität auf Raumtemperatur abgekühlt.

c-1): VZ = 61 mL/g; Mn = 8400 g/mol; PDI = 2.3

Herstellung des Triblocks iii)

I) Gewichtsverhältnis (L-PLA) zu (PBAT) = 1 : 2

140,0 g Mittelblock a-2) wurden in einem 500 mL Vierhalskolben vorgelegt und die Apparatur wurde mit Stickstoff gespült. Es wurde auf 180 °C Innentemperatur hochgeheizt und 70,0 g L-Lactid und 1,02 mL einer 10%igen Lösung von Zinn(II)-bis(2-ethylhexanoat in Toluol zugesetzt. Nach einer Stunde wurde Vakuum angelegt (2 mbar) und nach weiteren 30 min auf Raumtemperatur abgekühlt.

I-a2): VZ = 77 mL/g; Mn = 20000 g/mol; PDI = 2.4

II) Gewichtsverhältnis (L-PLA) zu (PBAT) = 1 : 1

100,0 g Mittelblock a-2) wurden in einem 500 mL Vierhalskolben vorgelegt und die Apparatur wurde mit Stickstoff gespült. Es wurde auf 180 °C Innentemperatur hochgeheizt und 100,0 g L-Lactid und 1,45 mL einer 10%igen Lösung von Zinn(II)-bis(2-ethylhexanoat in Toluol zugesetzt.

Nach einer Stunde wurde Vakuum angelegt (2 mbar) und nach weiteren 30 min auf Raumtemperatur abgekühlt.

II-a2): VZ = 74 mL/g; Mn = 25300 g/mol; PDI = 2.1

III) Gewichtsverhältnis (L-PLA) zu (PBAT) = 2 : 1

100,0 g Mittelblock a-2) wurden in einem 500 mL Vierhalskolben vorgelegt und die Apparatur wurde mit Stickstoff gespült. Es wurde auf 180 °C Innentemperatur hochgeheizt und 200,0 g L-Lactid und 2,90 mL einer 10%igen Lösung von Zinn(II)-bis(2-ethylhexanoat in Toluol zugesetzt. Nach einer Stunde wurde Vakuum angelegt (2 mbar) und nach weiteren 30 min auf Raumtemperatur abgekühlt.

III-a2): VZ = 84 mL/g; Mn = 40900 g/mol; PDI = 2.4

Beispiele 1 und 2 und Vergleichsbeispiel V-1

Die in Tabelle 1 angegebenen Polymermischungen wurden bei 190°C, einer Drehzahl von 80 min$^{-1}$ und einer Verweilzeit von 3 Minuten auf einem Micro 15cc Twin Screw Compounder der Firma DSM Netherlands (Miniextruder) als Strang ausgefahren. An Pressfolien der in Tabelle 1 angegebenen Dicke wurden folgende Zugeigenschaften ermittelt.

Tabelle 1: Mechanische Daten

| Beispiel | | V-1 | 1 | 2 |
|---|---|---|---|---|
| i-1 (PBAT) | [Gew.-%] bezogen auf i und ii | 68 | 68 | 68 |
| ii-1 (PLA) | [Gew.-%] bezogen auf i und ii | 32 | 32 | 32 |
| III-a2 (Triblock) | [Gew.-%] bezogen auf i bis iii | 0 | 10 | 30 |
| | | | | |
| Dicke der Pressfolie | $\mu$m | 228 | 246 | 200 |
| E-Modul | MPa | 205 | 210 | 537 |
| Streckdehnung $\varepsilon_y$ | % | 72,8 | 124,4 | 9,2 |
| Streckspannung $\sigma_y$ | MPa | 12,5 | 14,8 | 14,8 |
| Dehnung bei Zugfestigkeit $\varepsilon_M$ | % | 362 | 575 | 545 |
| Zugfestigkeit $\sigma_M$ | MPa | 14,4 | 35,4 | 28,9 |

(fortgesetzt)

| Beispiel | | V-1 | 1 | 2 |
|---|---|---|---|---|
| Bruchdehnung $\varepsilon_B$ | % | 463 | 577 | 548 |
| Bruchspannung $\sigma_B$ | MPa | 13,4 | 35,2 | 28,4 |
| Geleistete Zugarbeit bei Bruch $a_B$ | J/cm$^3$ | 26,8 | 52,5 | 44,9 |

Die Zugversuche zeigen eindrucksvoll, dass durch die Zugabe des Triblockpolymers iii bei den erfindungsgemäßen Polymermischungen 1 und 2 sowohl die Steifigkeit als auch die Zähigkeit gegenüber dem Vergleichssystems V-1 verbessert werden konnte.

**Patentansprüche**

1. Biologisch abbaubare Polyestermischung, umfassend

    i) 5 bis 85 Gew.-%, bezogen auf das Gesamtgewicht der Komponenten i bis ii, mindestens eines Polyesters auf Basis von aliphatischen oder aliphatischen und aromatischen Dicarbonsäuren und aliphatischen Dihydroxyverbindungen und
    ii) 15 bis 95 Gew.-%, bezogen auf das Gesamtgewicht der Komponenten i bis ii, Polymilchsäure, und
    iii) 1 bis 35 Gew.-%, bezogen auf das Gesamtgewicht der Komponenten i bis iii, eines Triblockpolymers iii erhältlich durch Umsetzung von:

        x) 20 bis 60 Gew.-%, bezogen auf die Komponente iii, eines Polyester-Mittelblocks auf Basis von aliphatischen oder aliphatischen und aromatischen Dicarbonsäuren und aliphatischen Dihydroxyverbindungen mit einem Molekulargewicht Mn gemessen nach $^1$H-NMR von 4.000 bis 25.000, mit
        y) 40 bis 80 Gew.-%, bezogen auf die Komponente iii, eines Lactids in Gegenwart eines Katalysators;

    iv) 0 bis 10 Gew.-%, bezogen auf das Gesamtgewicht der Komponenten i bis v, eines Additivs; und
    v) 0 bis 50 Gew.-%, bezogen auf das Gesamtgewicht der Komponenten i bis v, eines anorganischen oder organischen Füllstoffs.

2. Biologisch abbaubare Polyestermischung nach Anspruch 1, wobei ein Triblockpolymer iii eingesetzt wird, das erhältlich ist durch Umsetzung von:

    x) 20 bis 50 Gew.-%, bezogen auf die Komponente iii, eines Polyester-Mittelblocks auf Basis von aliphatischen oder aliphatischen und aromatischen Dicarbonsäuren und aliphatischen Dihydroxyverbindungen mit einem Molekulargewicht Mn gemessen nach $^1$H-NMR von 4.000 bis 20.000, und einem Verhältnis der Hydroxylzahl zu Säurezahl gemessen nach $^1$H-NMR von größer oder gleich 90% mit
    y) 50 bis 80 Gew.-%, bezogen auf die Komponente iii, eines Lactids in Gegenwart eines Zinn-Katalysators.

3. Biologisch abbaubare Polyestermischung nach Anspruch 1 oder 2, wobei Komponente i aufgebaut ist aus:

    A) einer Säurekomponente aus:

        a1) 30 bis 99 mol-% mindestens einer aliphatischen Dicarbonsäure oder deren esterbildende Derivate oder Mischungen davon
        a2) 1 bis 70 mol-% mindestens einer aromatischen Dicarbonsäure oder deren esterbildendem Derivat oder Mischungen davon,

    wobei die Molprozente der Komponenten a1) bis a2) 100% nicht überschreiten und
    B) einer Diolkomponente aus mindestens einem $C_2$-bis $C_{12}$-Alkandiol oder Mischungen davon; und
    C) einer Komponente ausgewählt aus:

        c1) mindestens einer Verbindung mit mindestens drei zur Esterbildung befähigten Gruppen,
        c2) mindestens eines Diisocyanates

c3) mindestens eines Diepoxids

oder Mischungen aus c1) bis c3).

4. Biologisch abbaubare Polyestermischung nach Anspruch 3, wobei in Komponente i):

- die aliphatische Dicarbonsäure (Komponente a1)) Bernsteinsäure, Adipinsäure oder Sebacinsäure, deren Ester bildende Derivate oder Mischungen davon bedeutet;
- die aromatische Dicarbonsäure (Komponente a2)) Terephthalsäure oder deren Ester bildende Derivate bedeutet, und
- die Diolkomponente (Komponente B) 1,4-Butandiol oder 1,3-Propandiol bedeutet.

5. Biologisch abbaubare Polyestermischung nach den Ansprüchen 3 und 4, wobei Komponente i aus einem verzweigten Polybutylenadipat-co-terephthalat und/oder Polybutylensebacat-co-terephthalat und der Polyester-Mittelblock x des Triblockpolymers iii aus einem linearen Polybutylenadipat-co-terephthalat und/oder Polybutylensebacat-co-terephthalat besteht.

6. Biologisch abbaubare Polyestermischung nach den Ansprüchen 1 und 2, wobei Komponente i aus einem verzweigten Polybutylensuccinat und der Polyester-Mittelblock x des Triblockpolymers iii aus einem linearen Polybutylensuccinat besteht.

7. Biologisch abbaubare Polyestermischung nach den Ansprüchen 1 bis 6, wobei Komponente ii zu größer 90 % aus Poly-L-Milchsäure besteht und als Baustein y in Komponente iii D-Lactid eingesetzt wird.

8. Biologisch abbaubare Polyestermischung nach den Ansprüchen 1 bis 6, umfassend
60 bis 85 Gew.-% Komponente i und
15 bis 40 Gew.-% Komponente ii,
jeweils bezogen auf das Gesamtgewicht der Komponenten i bis ii.

9. Biologisch abbaubare Polyestermischung nach den Ansprüchen 1 bis 7, umfassend
10 bis 40 Gew.-% Komponente i und
60 bis 90 Gew.-% Komponente ii,
jeweils bezogen auf das Gesamtgewicht der Komponenten i bis ii.

10. Biologisch abbaubare Polyestermischung nach den Ansprüchen 1 bis 5, wobei 5 bis 20 Gew.-% Komponente iii, bezogen auf das Gesamtgewicht der Komponenten i bis iii, zugegeben werden.

11. Verwendung der biologisch abbaubaren Polyestermischungen gemäß Anspruch 8 zur Herstellung von Tüten, Müllbeuteln und Mulchfolien.

12. Verwendung der biologisch abbaubaren Polyestermischungen gemäß Anspruch 9 zur Herstellung von Partikelschäumen, Papierbeschichtungen, thermogeformten Bauteilen und Spritzguss-Bauteilen.

**Claims**

1. A biodegradable polyester mixture comprising

i) from 5 to 85% by weight, based on the total weight of components i to ii, of at least one polyester based on aliphatic or aliphatic and aromatic dicarboxylic acids and on aliphatic dihydroxy compounds, and
ii) from 15 to 95% by weight, based on the total weight of components i to ii, of polylactic acid, and
iii) from 1 to 35% by weight, based on the total weight of components i to iii, of a triblock polymer iii obtainable via reaction of:

x) from 20 to 60% by weight, based on component iii, of a polyester middle block based on aliphatic or aliphatic and aromatic dicarboxylic acids and on aliphatic dihydroxy compounds with molecular weight Mn measured by $^1$H NMR of from 4000 to 25 000, with
y) from 40 to 80% by weight, based on component iii, of a lactide in the presence of a catalyst;

iv) from 0 to 10% by weight, based on the total weight of components i to v, of an additive; and

v) from 0 to 50% by weight, based on the total weight of components i to v, of an inorganic or organic filler.

2.  The biodegradable polyester mixture according to claim 1, where a triblock polymer iii is used which is obtainable via reaction of:

    x) from 20 to 50% by weight, based on component iii, of a polyester middle block based on aliphatic or aliphatic and aromatic dicarboxylic acids and on aliphatic dihydroxy compounds with molecular weight Mn measured by $^{1}$H NMR of from 4000 to 20 000, and with a ratio of hydroxy number to acid number measured by $^{1}$H NMR greater than or equal to 90%, with

    y) from 50 to 80% by weight, based on component iii, of a lactide in the presence of a tin catalyst.

3.  The biodegradable polyester mixture according to claim 1 or 2, wherein component i is composed of:

    A) an acid component made of:

    a1) from 30 to 99 mol% of at least one aliphatic dicarboxylic acid or ester-forming derivatives thereof, or a mixture of these,

    a2) from 1 to 70 mol% of at least one aromatic dicarboxylic acid or ester-forming derivative thereof, or a mixture of these, where the molar percentages of components a1) to a2) do not exceed 100%, and

    B) a diol component made of at least one $C_2$-$C_{12}$-alkanediol or a mixture of these; and

    C) a component selected from:

    c1) at least one compound having at least three groups capable of ester formation,

    c2) at least one diisocyanate,

    c3) at least one diepoxide,

    or a mixture of c1) to c3).

4.  The biodegradable polyester mixture according to claim 3, where, in component i):

    - the aliphatic dicarboxylic acid (component a1)) is succinic acid, adipic acid, or sebacic acid, ester-forming derivatives thereof, or a mixture of these;

    - the aromatic dicarboxylic acid (component a2)) is terephthalic acid or ester-forming derivatives thereof, and

    - the diol component (component B) is 1,4-butanediol or 1,3-propanediol.

5.  The biodegradable polyester mixture according to claims 3 and 4, where component i is composed of a branched polybutylene adipate-co-terephthalate and/or polybutylene sebacate-co-terephthalate and the polyester middle block x of the triblock polymer iii is composed of a linear polybutylene adipate-co-terephthalate and/or polybutylene sebacate-co-terephthalate.

6.  The biodegradable polyester mixture according to claims 1 and 2, where component i is composed of a branched polybutylene succinate and the polyester middle block x of the triblock polymer iii is composed of a linear polybutylene succinate.

7.  The biodegradable polyester mixture according to claims 1 to 6, where more than 90% of component ii is composed of poly-L-lactic acid and D-lactide is used as unit y in component iii.

8.  The biodegradable polyester mixture according to claims 1 to 6, comprising
    from 60 to 85% by weight of component i and
    from 15 to 40% by weight of component ii,
    based in each case on the total weight of components i to ii.

9.  The biodegradable polyester mixture according to claims 1 to 7, comprising
    from 10 to 40% by weight of component i and
    from 60 to 90% by weight of component ii,
    based in each case on the total weight of components i to ii.

**10.** The biodegradable polyester mixture according to claims 1 to 5, where from 5 to 20% by weight of component iii, based on the total weight of components i to iii, are added.

**11.** The use of the biodegradable polyester mixtures according to claim 8 for the production of carrier bags, trash bags, and mulch films.

**12.** The use of the biodegradable polyester mixtures according to claim 9 for the production of molded foams, paper coatings, thermoformed components, and injection-molded components.

**Revendications**

**1.** Mélange de polyester biodégradable, comprenant :

i) 5 à 85 % en poids, par rapport au poids total des composants i à ii, d'au moins un polyester à base d'acides dicarboxyliques aliphatiques ou aliphatiques et aromatiques et de composés dihydroxy aliphatiques, et
ii) 15 à 95 % en poids, par rapport au poids total des composants i à ii, d'acide polylactique, et
iii) 1 à 35 % en poids, par rapport au poids total des composants i à iii, d'un polymère triséquencé iii pouvant être obtenu par mise en réaction de :

x) 20 à 60 % en poids, par rapport au composant iii, d'une séquence centrale de polyester à base d'acides dicarboxyliques aliphatiques ou aliphatiques et aromatiques et de composés dihydroxy aliphatiques ayant un poids moléculaire Mn mesuré par RMN-$^1$H de 4 000 à 25 000, avec
y) 40 à 80 % en poids, par rapport au composant iii, d'un lactide

en présence d'un catalyseur ;
iv) 0 à 10 % en poids, par rapport au poids total des composants i à v, d'un additif ; et
v) 0 à 50 % en poids, par rapport au poids total des composants i à v, d'une charge inorganique ou organique.

**2.** Mélange de polyester biodégradable selon la revendication 1, dans lequel un polymère triséquencé iii est utilisé, qui peut être obtenu par mise en réaction de :

x) 20 à 50 % en poids, par rapport au composant iii, d'une séquence centrale de polyester à base d'acides dicarboxyliques aliphatiques ou aliphatiques et aromatiques et de composés dihydroxy aliphatiques ayant un poids moléculaire Mn mesuré par RMN-$^1$H de 4 000 à 20 000, et un rapport entre l'indice hydroxyle et l'indice d'acidité mesuré par RMN-$^1$H supérieur ou égal à 90 %, avec
y) 50 à 80 % en poids, par rapport au composant iii, d'un lactide

en présence d'un catalyseur d'étain.

**3.** Mélange de polyester biodégradable selon la revendication 1 ou 2, dans lequel le composant i est constitué par :

A) un composant acide constitué par :

a1) 30 à 99 % en moles d'au moins un acide dicarboxylique aliphatique ou ses dérivés formant des esters ou leurs mélanges,
a2) 1 à 70 % en moles d'au moins un acide dicarboxylique aromatique ou ses dérivés formant des esters ou leurs mélanges,

les pourcentages en moles des composants a1) à a2) ne dépassant pas 100 %, et
B) un composant diol constitué par au moins un alcanediol en $C_2$ à $C_{12}$ ou des mélanges de celui-ci ; et
C) un composant choisi parmi :

c1) au moins un composé contenant au moins trois groupes aptes à la formation d'esters,
c2) au moins un diisocyanate,
c3) au moins un diépoxyde,

ou des mélanges de c1) à c3).

4.  Mélange de polyester biodégradable selon la revendication 3, dans lequel, dans le composant i) :

    - l'acide dicarboxylique aliphatique (composant a1) signifie l'acide succinique, l'acide adipique ou l'acide sébacique, leurs dérivés formant des esters ou leurs mélanges ;
    - l'acide dicarboxylique aromatique (composant a2)) signifie l'acide téréphtalique ou ses dérivés formant des esters, et
    - le composant diol (composant B) signifie le 1,4-butanediol ou le 1,3-propanediol.

5.  Mélange de polyester biodégradable selon les revendications 3 et 4, dans lequel le composant i est constitué par un polyadipate-co-téréphtalate de butylène et/ou un polysébacate-co-téréphtalate de butylène ramifié, et la séquence centrale de polyester x du polymère triséquencé iii est constituée par un polyadipate-co-téréphtalate de butylène et/ou un polysébacate-co-téréphtalate de butylène linéaire.

6.  Mélange de polyester biodégradable selon les revendications 1 et 2, dans lequel le composant i est constitué par un polysuccinate de butylène ramifié et la séquence centrale de polyester x du polymère triséquencé iii est constituée par un polysuccinate de butylène linéaire.

7.  Mélange de polyester biodégradable selon les revendications 1 à 6, dans lequel le composant ii est constitué de plus de 90 % d'acide poly-L-lactique et du D-lactide est utilisé en tant que constituant y dans le composant iii.

8.  Mélange de polyester biodégradable selon les revendications 1 à 6, comprenant :

    60 à 85 % en poids du composant i et
    15 à 40 % en poids du composant ii,

    à chaque fois par rapport au poids total des composants i à ii.

9.  Mélange de polyester biodégradable selon les revendications 1 à 7, comprenant
    10 à 40 % en poids du composant i et
    60 à 90 % en poids du composant ii,
    à chaque fois par rapport au poids total des composants i à ii.

10. Mélange de polyester biodégradable selon les revendications 1 à 5, dans lequel 5 à 20 % en poids du composant iii, par rapport au poids total des composants i à iii, est ajouté.

11. Utilisation des mélanges de polyester biodégradables selon la revendication 8 pour la fabrication de sacs, de sacs poubelles et de films de paillage.

12. Utilisation des mélanges de polyester biodégradables selon la revendication 9 pour la fabrication de mousses particulaires, de revêtements de papier, de composants thermoformés et de composants moulés par injection.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2010126619 A
- US 5202413 A
- EP 697427 A
- EP 618250 A
- EP 1838784 A
- WO 9209654 A
- WO 9615173 A
- WO 15176 A
- WO 21689 A
- WO 21692 A
- WO 25446 A
- WO 25448 A
- WO 9812242 A
- WO 2006097353 A
- WO 2006097354 A
- WO 2010034710 A
- WO 2010034711 A
- EP 539541 A
- EP 575349 A
- EP 652910 A